(19) Europäisches Patentamt
European Patent Office
Office européen des brevets

(11) Publication number: 0 155 517 B1

(12) EUROPEAN PATENT SPECIFICATION

(45) Date of publication of patent specification: 25.04.90

(51) Int. Cl.[5]: C 08 L 67/02, C 08 K 5/52, C 08 K 5/09, C 08 J 3/20

(21) Application number: 85101800.2

(22) Date of filing: 19.02.85

# (54) Polyester composition and process for producing shaped articles using same.

(30) Priority: 20.02.84 JP 31050/84

(43) Date of publication of application: 25.09.85 Bulletin 85/39

(45) Publication of the grant of the patent: 25.04.90 Bulletin 90/17

(84) Designated Contracting States: BE DE FR GB IT NL SE

(56) References cited:
EP-A-0 092 357
DE-A-2 626 225
DE-A-2 633 944
US-A-4 229 332
PATENT ABSTRACTS OF JAPAN, vol. 8, no. 122 (C-227)1559r, 8th June 1984; & JP - A - 59 33355 (KANEGAFUCHI KAGAKU KOGYO K.K.) 23-02-1984
PATENT ABSTRACTS OF JAPAN, vol. 2, no. 43, 23th March 1978, page 4989 C 77; & JP - A - 52 152 954 (UNITIKA K.K.) 19-12-1977

(73) Proprietor: KANEGAFUCHI KAGAKU KOGYO KABUSHIKI KAISHA
2-4 Nakanoshima 3-chome
Kita-ku Osaka-shi Osaka-fu (JP)

(72) Inventor: Asada, Masahiro
No. 45-102, 1-1, 8-chome, Yokoo
Suma-ku Kobe-shi Hyogo-ken (JP)
Inventor: Takase, Junji
158-203, 5-1, Hontamon Tarumi-ku
Kobe-shi Hyogo-ken (JP)

(74) Representative: Vossius & Partner
Siebertstrasse 4 P.O. Box 86 07 67
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention relates to polyester compositions comprising an aromatic polyester, a phosphite compound and a carboxylic acid metal salt and a process for producing shaped articles using these compositions. More specifically, it relates to polyester compositions and a process for producing shaped articles therefrom comprising specified aromatic polyesters, specified phosphite compounds and specified organic carboxylic acid metal salts, which are not only improved in discoloration and processability at the time of molding, but also show long-term heat resistance and durability.

Aromatic polyesters are well-known and various processes have been proposed heretofore; (a) an interfacial polymerization that admixes aromatic dicarboxylic acid dihalides dissolved in an organic solvent non-soluble in water with bisphenols dissolved in an aqueous alkali solution (Examined jap. patent publication No. 1959/65), (b) a solution polymerization in which aromatic dicarboxylic acids are reacted with bisphenols in the presence of an organic solvent (5599/62), (c) an ester interchange process in which aromatic dicarboxylic acids and bisphenols are heated (15247/63 and 28119/68), (d) a process of using phase transfer catalysts, etc. Aromatic polyester polymers so prepared have excellent properties including such as heat resistancy, mechanical and electrical properties, so that those in a widespread use as polymers per se or compositions including shaped articles, films, fibers and the like.

The polymers used in the present invention may be prepared by various processes as aforesaid. The polymers, nonetheless, are inferior in processability and necessitate a high plasticizing temperature and a high injecting pressure, from a viewpoint of an extrusion or injection molding. Those also pose a problem of discoloration, when processed, which cannot be neglected. Further, aromatic polyester compounds are normally poor in resistance to hydrolysis. Those polymers, when exposed to high temperature for a long time, suffer from degradation whcih results in a decrease of the molecular weight. This phenomenon inevitably leads to a deterioration in properties such as strength of the shaped articles, and therefore an improvement is necessary.

In an attempt to overcome such deficiencies, a variety of processes have been proposed, e.g., use of organic phosphines (Non-examined jap. patent publication No. 102042/76), use of phosphoous compounds (100551/77, 134663/77), use or organic carboxylic acid metal salts (152953/77), conjoint use of organic carboxylic acid metal salts and cyclic phosphites (252954/78), conjoint use of carboxylic acid metal salts/ epoxy compounds/phosphorous compounds (104654/78), conjoint use of epoxy compounds and phosphorous compounds (104654/78), conjoint use of epoxy compounds and organic carboxylic acid metal salts (84046/78), treatment with reducing agents (30895/76). In those publications, however, mention is only made as to aromatic polyesters comprising terephthalic acid/isophthalic acid and bisphenol A, and satisfactory results are not expected as far as aromatic polyesters, especially those defined by the general formula (V) stated below. Moreover, DE—A—2,633,944 discloses an aromatic copolyester composition comprising an aromatic copolyester, a spiro phosphite and a metal salt of an organic carboxylic acid. However, that composition is not necessarily satisfactory in moisture resistance as well as tensile strength after aging.

Thus, the technical problem underlying the present invention is to provide polyester compositions which are easy to mold or to shape for preparing shaped articles, and to provide shaped articles from these polyester compositions having an improved long-term heat resistancy and durability, which also maintains a high heat distortion temperature.

This problem is solved by the polyester composition of claim 1. Claims 2 to 10 relate to the preferred embodiments of the polyester composition of claim 1.

The polyester composition has not only improved resistance against discoloration and improved processability, but also excellent heat resistancy and durability, in particular moisture resistance.

The present invention further relates to a process for producing shaped articles having excellent heat resistance and durability, which comprises the steps as stated in claim 11.

The aromatic polyesters to be used in the present invention contain recurring structural units defined by the general formulas (I) and (II). The polymers should preferably have the molar ratio in the polymers of (I) to (I) + (II) ranging from 1 to 0.01. With a view to obtaining polymers with higher heat distortion temperatures, the polymers should preferably have a molar ratio of terephthalic acid (III) to isophthalic acid (IV) + terephthalic acid (III) ranging from 1 to 0.4, more preferably 1 to 0.9;

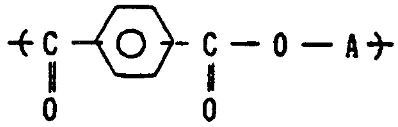

(III)

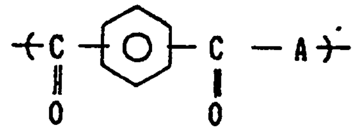

(IV)

wherein

A = bisphenol residue.

More preferably, the recurring structural unit defined by the general formula (I) should be one defined by the general formula (V):

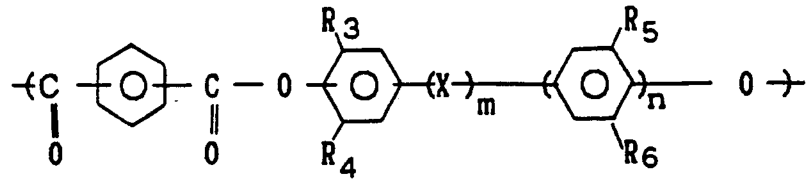

(V)

wherein

X, m, n = same as stated in claim 1,

$R_3$ to $R_6$ = $C_1$—$C_4$ alkyl, alkoxy or phenyl.

The acid components to be used in the present invention may be derived from terephthalic acid or isophthalic acid. Aromatic rings may have substituents.

The bisphenol components to be used in the present invention may be derived from the general formula (IX) to (X);

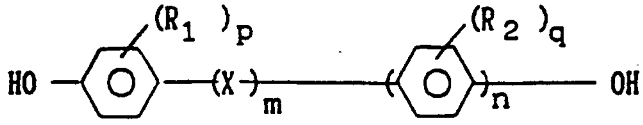

(IX)

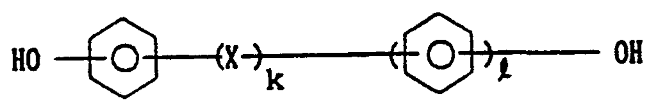

(X)

wherein

X, $R_1$, $R_2$, p, q, m, n, k or l = same as stated in claim 1.

More preferably, the compounds defined by the formula (IX) should be those defined by the general formula (XI)

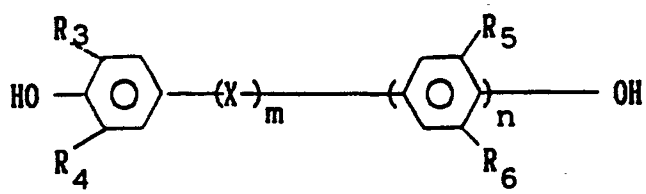

(X I)

wherein

X, m, n, $R_3$ to $R_6$ = same as stated above.

Examples of the divalent phenols (XI) are bis(4-hydroxyphenyl)methane, 1,1-bis(4-hydroxyphenyl)ethane, 2,2-bis(4-hydroxyphenyl)propane, bis(4-hydroxyphenyl)sulfon, bis(4-hydroxyphenyl)ketone, 4,4′-dihydroxydiphenylether and 4,4′-dihydroxyphenylsulfide). Examples of the divalent phenols (X) are 2,2-bis(3,5-dimethyl-4-hydroxyphenyl)propane, 2,2-bis(3,5-di-sec-butyl-4-hydroxyphenyl)propane, 2,2-bis(3,5-di-tert-butyl-4-hydroxyphenyl)propane, bis(3,5-dimethyl-4-hydroxyphenyl)methane, 1,1-bis(3,5-dimethyl-4-hydroxyphenyl)ethane, 1,1-bis(3,5-dimethyl-4-hydroxyphenyl) cyclohexane, bis(3,5-dimethyl-4-hydroxyphenyl)sulfon, bis(3,5-dimethyl-4-hydroxyphenyl)ketone, bis(3,5-dimethyl-4-hydroxyphenyl)ether, bis(3,5-dimethyl-4-hydroxyphenyl)sulfide, 2,2-bis(3,5-dimethyl-4-hydroxyphenyl)hexafluoropropane, 2,2-bis(3,5-dimethoxy-4-hydroxyphenyl)propane, bis(3,5-dimethoxy-4-hydroxyphenyl)methane, 2,2-bis(3-methoxy-4-hydroxy-5-methylphenyl)propane, bis(3-methoxy-4-hydroxy-5-methylphenyl)methane, bis(3,5-diphenyl-4-hydroxyphenyl)methane, 2,2-bis(3,5-diphenoxy-4-hydroxyphenyl)propane, bis(3-phenoxy-4-hydroxy-5-methyl)methane, 4,4′-dihydroxy-3,3′,5,5′-tetramethylbiphenyl and 4,4′-dihydroxy-3,3′,5,5′-tetraethylbiphenyl.

In addition, condensed polycyclic bisphenols such as dihydroxynaphthalene and dihydroxyanthracene; bisphenolic dyes and pigments such as alizarin, phenolphthalein, fluorescein, naphtophtaleine, thymolphthalein, aurin, phenolsulfophthalein and dibromophenolsulfophthalein; dinaphthyl compounds such as 2,2′-dihydroxy-1,1′-dinaphthylmethane, 4,4′-dihydroxydinaphthyl-1,1′, 2,2′-dihydroxydinaphthyl-1,1′, 1,1′-bis(4-hydroxynaphthyl)-2,2,2-trichloroethane and 2,2′-dihydroxydinaphthylphenyl-methane may be partly substituted for bisphenols.

Usually, monofunctional compounds may further be used for the adjustment of molecular weight. Examples of the monofunctional compounds are monophenols such as phenol, methoxyphenol, t-butylphenol, octylphenol and nonylphenol; monothiophenols; acid chlorides and amines.

The molecular weight of the polymers should preferably be 0.4 to 0.8 in terms of ηsp/c (32°C, chloroform, 0.32 dl/g).

In aromatic polyesters such as defined by the foregoing structure, the component defined by the general formula (XI) impart superior water-resistancy and alkali-resistancy as compared with conventional aromatic polyesters. The aromatic polyesters, however, have the drawback that shaped articles are discolored and, in consequence, inferior in long-term heat resistancy and durability because of poor flowability upon molding, though possessing high heat distortion temperature.

The phosphite compounds to be used in the present invention have the general formula (VI):

$$(R_7O)_3P \text{ or } (R_7O)_2P-O-R_8-O-P(OR_7)_2 \qquad \text{(VI)}$$

wherein

$R_7$ = $R_8$—$C_{30}$ alkyl, cycloalkyl, aryl, arylalkyl or alkylaryl,

$R_8$ = $C_1$—$C_{50}$ aromatic or aliphatic.

The phosphite compounds may be more preferable when $R_7$ is $C_8$—$C_{30}$ aryl or alkylaryl, or when defined by the general formula (VII):

$$-(R_9-O-P(OR_{10})-O)_n- \qquad \text{(VII)}$$

wherein

$R_9$ = same as $R_8$

$R_{10}$ = same as $R_7$

n = integer of 3 to 50.

Examples of the phosphite compounds defined by the general formula (VI) are tridecylphosphite, triisodecylphosphite, tris(tridecylphosphite), phenyl(didecylphosphite), phenyldi(tridecyl)phosphite, diphenyloctylphosphite, diphenyldecylphosphite, diphenyltridecylphosphite, tris(nonylphenyl)phosphite, di(dinonylphenyl)-nonylphenylphosphite, tris(di-t-butylphenyl)phosphite, tetraphenyldipropyleneglycoldiphosphite, 4,4'-butylidene-bis(3-methyl-6-t-butylphenyl-didoceylphosphite, tetra(tridecyl)-4,4'isopropylidenediphenyldiphosphite. Moreover, the phosphite compounds defined by the following general formulae may also be used:

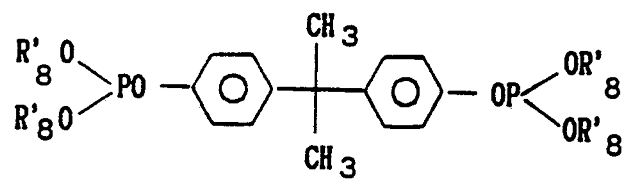

wherein

$R'_8 = C_{12} - C_{15}$ alkyl

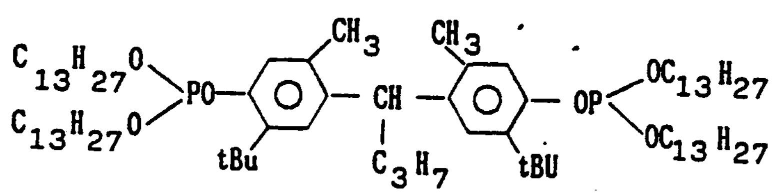

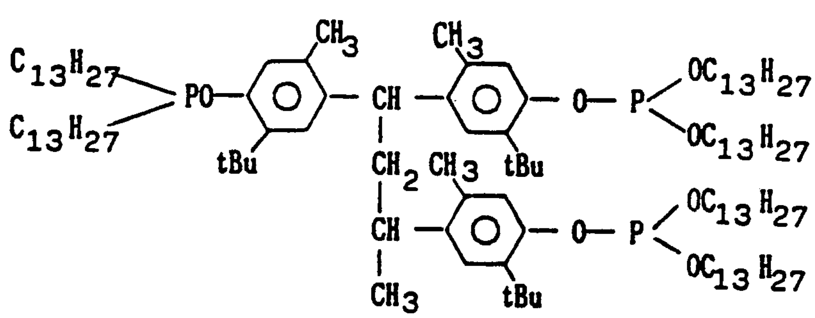

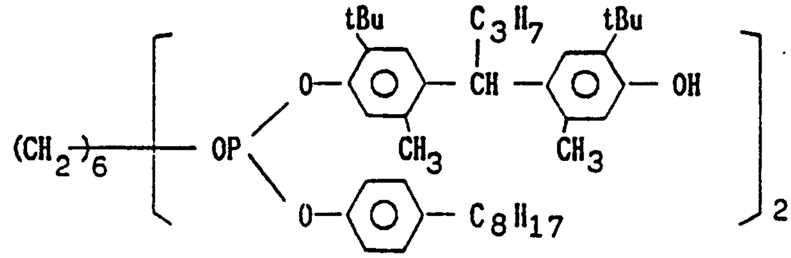

Typically, an example defined by the general formula (VII) is a hydrogenated bisphenol A phosphite polymer.

An amount of the phosphite compound in the polyester composition of the present invention is 0.01 to 5 parts by weight based on 100 parts by weight of the aromatic polyester. In the case of less than 0.01 part by weight, satisfactory results are not provided, and in the case of exceeding 5 parts by weight, heat distortion temperature decreases.

The carboxylic acid metal salts to be used in the present invention are metal salts of $C_7$—$C_{30}$ aliphatic or aromatic carboxylic acids and metal belongs to the II or IV group of the short periodic table of elements. Preferred carboxylic acids are $C_{11}$—$C_{23}$ aliphatic carboxylic acids, including e.g. lauric acid, myristic acid, palmitic acid, stearic acid, behenic acid, linolic acid, oleic acid and erucic acid. Preferred metals are, for example, calcium, barium, zinc, lead, tin and cadmium salts.

An amount of the carboxylic acid metal salt in the polyester composition of the present invention is 0.01 to 0.1 part by weight based on 100 parts by weight of the aromatic polyester, with which discoloration upon molding can be sufficiently prevented. With an amount less than 0.01 part by weight, a marked effect is not expected and with an amount exceeding 0.1 part, chemical resistance, particularly, organic solvent resistance is lost.

When shaped articles are prepared from the polyester composition of the present invention, the aromatic polyester is, at first, admixed under heat with the phosphite compound, then the obtained admixture being pelletized. Thereafter, the resulting pellets and the carboxylic acid metal salt are admixed under heat, then shaped e.g. by injection molding or extrusion molding. It has been discovered that the above process can reduce the amount of each additive as shown by examples, or can use a polyester of higher molecular weight when the same amount of additives are added, as compared with cases where all the components are admixed upon pelletizing.

As a rule, aromatic polyester shaped articles become improved in properties such as heat resistance and chemical resistance as the amount of additives decreases and the molecular weight of the polymer is high. The reason why outstanding results can be obtained with the polyester compositions of the present invention is not clear, but presumably the phosphite compound not only prevents discoloration, but acts as an inner lubricant, while the carboxylic acid metal salt acts as an outer lubricant.

One of features of the present invention is, as stated above, to add those additives stepwise to the aromatic polyester. The admixing of the phosphite compound with the aromatic polyester is accomplished by use of e.g. a U-type blender, a Henshel mixer, a Super mixer or a kneader. The admixing of the pellets with the carboxylic acid metal salt is attained by use of e.g. a ribbon blender.

The polyester compositions of the present invention may further contain a small amount of additives such as an antioxidant, an age resister and a light stabilizer, with a view to improving heat resistance weatherability, oxidation resistance, etc. To impart flame retardance to the compositions, various known flame retardants may be added. Moreover, inorganic fibers such as glass fibers and metallic whiskers, carbon fibers, organic fibers, etc. may be added to reinforce the compositions. Coloring by addition of dyes and pigments is, of course, possible and addition of inorganic fillers is also possible. Moreover, it is also possible to provide compositions endowed with a variety of characteristics by blending with other resins.

Aromatic polyester compositions thus obtained are subjected to molding or shaping and have a widespread use as shaped articles, films or sheets in mechanical parts, electrical parts and the like.

Hereinafter, the present invention will be explained in more detail by way of examples and comparative examples that follow, to which the invention is in no way limited.

Reference Example 1

221.18 g of bisphenol A, 124.57 g of 3,3',5,5'-tetramethylbisphenol F, 9.97 g of paramethoxyphenol, 2.64 g of sodium hydrosulfite, 960 ml of 4N-NaOH and 1660 ml of deionized water were admixed under a nitrogen atmosphere in a 3 l flash and cooled to 2°C to obtain an aqeuous alkali solution of the bisphenol.

On the other hand, in another 3 l flask 274.05 g of tetraphthalic acid chloride and 30.45 g of is phthalic acid chloride were dissolved under a nitrogen atmosphere in 2500 ml of methylene chloride and cooled to 2°C.

Into an 8 l separable flask, 1000 ml of deionized water and 0.47 g of benzyl tributyl ammonium chloride serving as a catalyst were charged under a nitrogen atmosphere and cooled similarly.

The foregoing two liquids were respectively added by pumps continously with violent stirring over 800 seconds into the 8 l separable flask. After 5 hours from the termination of addition, the reaction product was added into 100 ml of methylene chloride containing 4.22 g of benzoyl chloride. When stirring was stopped after 20 minutes, the contents were separated after about 10 minutes into two layers, i.e. a methylene chloride solution containing a polymer and an aqueous solution containing sodium chloride and caustic soda. After the aqueous layer having been decanted, the same amount of water was added and the contents were neutralized with stirring with a small amount of hydrochloric acid. After desalting by washing was repeated, into the methylene chloride solution was the same amount of acetone added gradually to precipitate the polymer, which was recovered as powder. The obtained polymer had a molecular weight of 0.70 in terms of ηsp/c (32°C, chloroform, 0.32 dl/g).

Examples 1—6
Comparative Examples 1—4

100 parts by weight of the polymers prepared according to Reference Example 1 were blended by a Henshel mixer with the phosphite compounds as set forth in Table 1 and the blends were extruded at 330°C to give pellets. Thereafter, carboxylic acid metal salts lited in Table 1 were uniformly blended with the pellets, then subjected to injection molding at 360°C to prepare test pieces (dumbbell No. 1). These dumbbells were tested for heat deterioration by placing them in a gear oven heated to 160°C. A similar test was also conducted in saturated steam at 90°C. The results are shown in Table 1.

TABLE 1

| | Additives (Parts by wt) | | Tensile strength (kg/cm) | | Coloring | | Moisture (b) resistance |
|---|---|---|---|---|---|---|---|
| | Phosphite | Carboxylic acid salt | Immediately after molding | After (a) aging | Immediately after molding | After aging (a) | |
| | | | *) | *) | | | |
| Example 1 | $P_1$ (0.5) | $C_1$ (0.05) | 750 (7.35) | 750 (7.35) | Pale yellow | Yellow brown | A |
| Example 2 | $P_2$ (0.5) | $C_1$ (0.1) | 750 (7.35) | 760 (7.45) | Pale yellow | Yellow brown | A |
| Example 3 | $P_2$ (0.5) | $C_2$ (0.1) | 750 (7.35) | 800 (7.85) | Pale yellow | Yellow brown | A |
| Example 4 | $P_1$ (1) | $C_1$ (0.07) | 750 (7.35) | 800 (7.85) | Pale yellow | Yellow | A |
| Example 5 | $P_1$ (0.1) | $C_1$ (0.05) | 750 (7.35) | 720 (7.06) | Pale yellow | Pale brown | A |
| Example 6 | $P_1$ (3) | $C_1$ (0.05) | 750 (7.35) | 750 (7.35) | Pale yellow | Pale yellow | A |
| Comp. Ex. 1 | 0 | 0 | (Molding is impossible) | | | | |
| Comp. Ex. 2 | $P_1$ (0.5) | 0 | 750 (7.35) | 350 (5.39) | Yellow | Brown | C |
| Comp. Ex. 3 | 0 | $C_1$ (0.7) | 750 (7.35) | 290 (3.43) | Pale yellow | Black brown | D |
| Comp. Ex. 4 | $P_3$ (0.5) | $C_2$ (0.1) | 750 (7.35) | 550 (2.84) | Pale yellow | Yellow brown | B |

*) $\times 10^7$ (Pa)

As is apparent from the results of Table 1, Examples 1—6 are all superior in tensile strength after aging, as compared with Comparative Examples 2—3, and also excellent in moisture resistance. Comparative Example 4 which employed a cyclic phosphite is insufficient in tensile strength after aging and moisture resistance. With a carboxylic acid metal salt alone, at least 0.7 part by weight was required to ensure molding, as shown by Comparative Example 3.

Test conditions:

(a) 7 days, in a gear oven at 160°C,

(b) 3 days, in saturated steam at 90°C.

Criteria of moisture resistance:

A: Neither creases or cracks are observed

B: A small number of creases or cracks are observed

C: A fair number of cracks are observed

D: A great number of cracks are observed.

Additives:

$P_1$ : 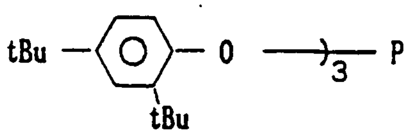

$P_2$ : 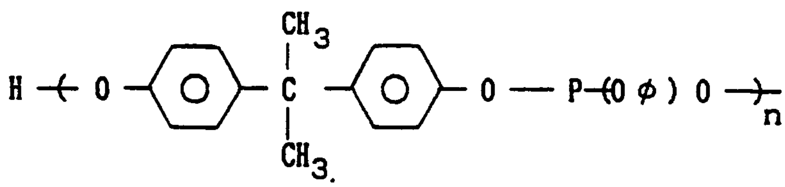

$P_3$ : 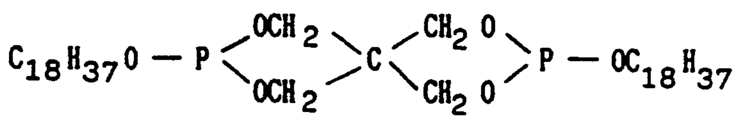

$C_1$ : Magnesium stearate

$C_2$ : Calcium stearate

Reference Example 2

An aromatic polyester was prepared in a similar manner to that of Reference Example 1, except that 138.2 of 3,3′,5,5′-tetramethylbisphenol A was used in place of 124.57 g of tetramethylbisphenol F. The obtained polymer had a molecular weight of 0.68 in terms of ηsp/c (32°C, chloroform, 0.32 dl/g).

Examples 7—8

Comparative Example 5

With 100 parts by weight of the polymers prepared by Reference Example 2, phosphite compounds and carboxylic acid metal salts as set forth in Table 2 were blended.

Test samples were prepared using the blends and supplied for the test, similarly to Examples 1—6. Table 2 shows the results.

TABLE 2

| | Additives (Parts by wt) | | Tensile strength (kg/cm) | | Coloring | | Moisture (b) resistance |
|---|---|---|---|---|---|---|---|
| | Phosphite | Carboxylic acid salt | Immediately after molding | After (a) aging | Immediately after molding | After aging (a) | |
| | | | *) | *) | | | |
| Example 8 | $P_1$ (1) | $C_1$ (0.07) | 780 (7.65) | 800 (7.85) | Pale yellow | Pale brown | A |
| Example 9 | P1 (3) | $C_1$ (0.05) | 780 (7.65) | 780 (7.65) | Pale yellow | Yellow | A |
| Comp Ex. 4 | $P_1$(1) | 0 | 760 (7.45) | 250 (2.45) | Pale yellow | Brown | C |

*) $X10^7$ (Pa)

**Claims**

1. A polyester composition comprising

A. 100 parts by weight of an aromatic polyester containing recurring units of the general formulae (I) and (II),

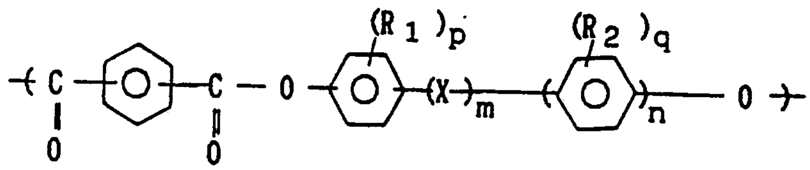

(I)

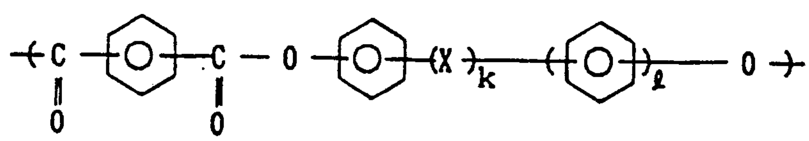

(II)

wherein

$X = C_1$—$C_{10}$ alkylene, $C_5$—$C_{15}$ cycloalkylene or cycloalkylidene, —O—, —S—, —CO— or —$SO_2$—

$R_1, R_2 = C_1$—$C_{20}$ alkyl, aryl, aralkyl, alkoxy, aryloxy, or arylalkoxy

p, q; $p + q$ = integer of 1 to 8 ($1 \leqq p, q \leqq 4$)

m, n = 0 or 1 (if m = 1, n ≠ 0)

k, l = 0 or 1 (if k = 1, l ≠ 0), and

molar ratio (I)/(I) + (II) = 1—0.01.

B. 0.01 to 5 parts by weight of a phosphite compound of the general formula (VI);

$$(R_7O)_3P \text{ or } (R_7O)_2P{-}OR_8{-}O{-}P(OR_7)_2 \qquad \text{(VI)}$$

wherein

$R_7 = R_8$—$C_{30}$ alkyl, cycloalkyl, aryl, arylalkyl or alkylaryl,

$R_8 = C_1$—$C_{50}$ aromatic or aliphatic (each substituent may or may not be the same) or of the general formula:

$$-(R_9{-}O{-}P(OR_{10}){-}O)_n- \qquad \text{(VII)}$$

wherein

$R_9$ = same as $R_8$

$R_{10}$ = same as $R_7$

n = integer of 3 to 50.

C. 0.01 to 0.1 part by weight of a carboxylic acid metal salt.

2. The composition of Claim 1, wherein molar ratio of (III)/(III) + (IV) contained in the aromatic polyester ranges from 1 to 0.1:

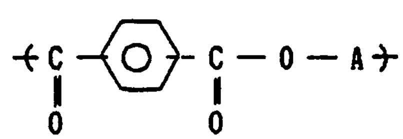

(III)

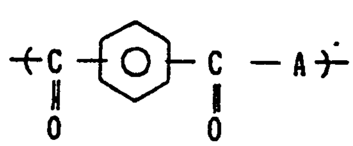

(IV)

wherein

A = bisphenol residue.

3. The composition of Claim 2, wherein the molar ratio of (III)/(III) + (IV) ranges from 1 to 0.4.

4. The composition of Claim 2, wherein the molar ratio of (III)/(III) + (IV) ranges from 1 to 0.9.

5. The composition of Claim 1, wherein the general formula (I) is defined by general formula (V):

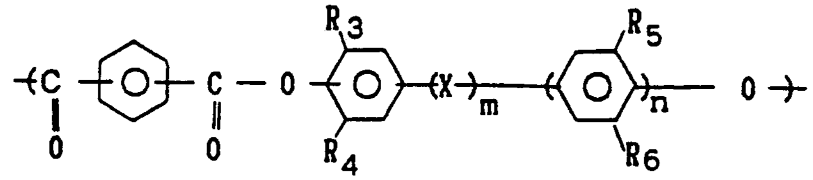

wherein

X, m, n = same as stated in claim 1,

$R_3$ to $R_6$ = $C_1$—$C_4$ alkyl, alkoxy or phenyl.

6. The composition of Claim 1, wherein the aromatic polyester has a specific viscosity of from 0.4 to 0.8 dl/g (32°C, chloroform).

7. The composition of Claim 1, wherein $R_7$ of the phosphite compound (VI) is $C_8$—$C_{30}$ aryl or alkylaryl.

8. The composition of Claim 1, wherein the carboxylic acid used as teh carboxylic acid metal salt has the general formula (VIII):

$$R_{11}\text{—COOH} \qquad \text{(VIII)}$$

wherein

$R_{11}$ = $C_7$—$C_{30}$ aliphatic or aromatic residue.

9. The composition of Claim 8, wherein the carboxylic acid is a $C_{11}$—$C_{23}$ saturated or unsaturated carboxylic acid.

10. The composition of Claim 1, wherein the metal used as the carboxylic acid metal salt belongs to the II to IV group of the short periodic table of elements.

11. A process for producing shaped articles comprising the steps of

blending 100 parts by weight of an aromatic polyester according to any one of claims 1 to 6 with 0.01 to 5 parts by weight of a phosphite compound according to any one of claims 1 and 7,

admixing the blend under heat uniformity,

extruding and pelletizing the resulting blend,

blending the resulting pellets with a carboxylic acid metal salt according to any one of claims 1 and 8 to 10, and

molding the resulting blend.

**Patentansprüche**

1. Polyesteramine, umfassend

A. 100 Gew.-Teile eines aromatischen Polyesters, der widerkehrende Einheiten der allgemeinen Formeln (I) und (II) enthält

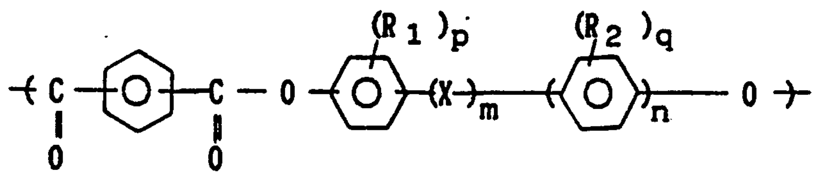

(I)

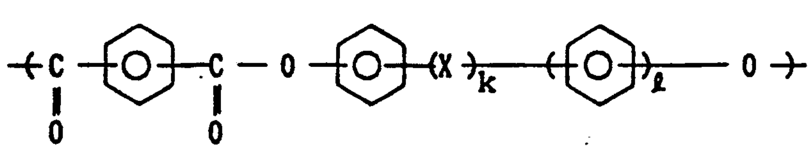

(II)

wobei

X = ein $C_1$—$C_{10}$-Alkylen-, $C_5$—$C_{15}$-Cycloalkylen- oder Cycloalkylidenrest —O—, —S—, —CO— oder —$SO_2$—

$R_1$, $R_2$ = ein $C_1$—$C_{20}$-Alkyl, Aryl-, Aralkyl-, Alkoxy-, Aryloxy- oder Arylalkoxyrest,

p, q; p + q = eine ganze Zahl von 1 bis 8 ($1 \leqq p, q \leqq 4$)

m, n = 0 oder 1 (wenn m = 1, n ≠ 0)

k, l = 0 oder 1 (wenn k = 1, l ≠ 0), und

das Molverhältnis (I)/(I) + (II) = 1—0.01.

B. 0,01 bis 5 Gew.-Teile einer Phosphitverbindung der allgemeinen Formel (VI)

$$(R_7O\!\!-\!\!)_3\text{—P oder }(R_7O\!\!-\!\!)_2\text{P—OR}_8\text{—O—P}(\!-\!OR_7)_2 \qquad \text{(VI)}$$

in der

$R_7$ = ein $R_8$—$C_{30}$-Alkyl-, Cycloalkyl-, Aryl-, Arylalkyl- oder Alkylarylrest-,

$R_8$ = ein $C_1$—$C_{50}$-aromatischer oder aliphatischer Rest (alle Substituenten können oder können nicht gleich sein) oder

der allgemeinen Formel

$$-\!\!(R_9—O—P(OR_{10})—O)\!\!-_n \qquad \text{(VII)}$$

in der

$R_9$ die gleiche Bedeutung wie $R_8$ hat,

$R_{10}$ die gleiche Bedeutung wie $R_7$ hat, und

n eine ganze Zahl von 3 bis 50 ist, und

C. 0,01 bis 0,1 Gew.-Teile eines Carbonsäure-Metallsalzes.

2. Masse nach Anspruch 1, in der das Molverhältnis von (III)/(III) + (IV) in dem aromatischen Polyester im Bereich von 1 bis 0,1 liegt:

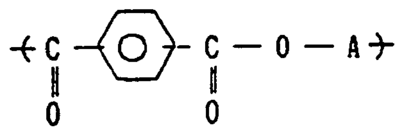

(III)

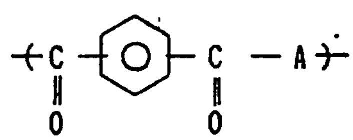

(IV)

wobei A einen Bisphenolrest bedeutet.

3. Masse nach Anspruch 2, wobei das Molverhältnis (III)/(III) + (IV) im Bereich von 1 bis 0,4 liegt.

4. Masse nach Anspruch 2, wobei das Molverhältnis (III)/(III) + (IV) im Bereich von 1 bis 0,9 liegt.

5. Masse nach Anspruch 1, wobei die allgemeine Formel (I) durch die allgemeine Formel (V) definiert ist

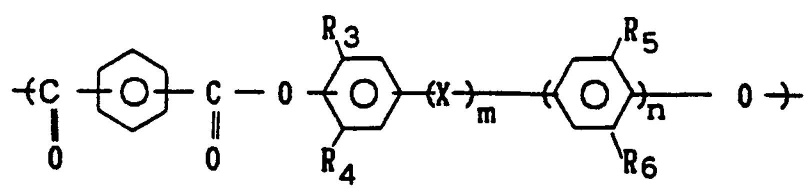

(V)

in der

X, m und n gleiche Bedeutung wie im Anspruch 1 haben, und

$R_3$ bis $R_6$ $C_1$—$C_4$-Alkyl- oder Alkoxyreste oder Phenylgruppen sind.

6. Masse nach Anspruch 1, wobei der aromatische Polyester eine spezifische Viskosität von 0,4 bis bis 0,8 dl/g (32°C, Chloroform) besizt.

7. Masse nach Anspruch 1, wobei $R_7$ in der Phosphitverbindung (VI) ein $C_8$—$C_{30}$-Aryl- oder Alkylarylrest ist.

8. Masse nach Anspruch 1, wobei die als Carbonsäure-Metallsalz verwendete Carbonsäure die allgemeine Formel VIII aufweist

$$R_{11}—COOH \qquad \text{(VIII)}$$

in der $R_{11}$ einen $R_7$—$C_{30}$-aliphatischen oder aromatischen Rest darstellt.

9. Masse nach Anspruch 8, in der die Carbonsäure eine gesättigte oder ungesättigte $C_{11}$—$C_{23}$-Carbonsäure ist.

10. Masse nach Anspruch 1, in der das als Carbonsäure-Metallsalz verwendete Metall zu den Gruppen II bis IV des kurzen Periodensystems der Elemente gehört.

11. Verfahren zur Herstellung von Formkörpern, umfassend die Stufen:

Vermischen von 100 Gew.-Teilen eines aromatischen Polyesters nach einem der Ansprüche 1 bis 6 mit 0,01 bis 5 Gew.-Teilen einer Phosphitverbindung nach einem der Ansprüche 1 und 7,

gleichmäßiges Vermischen des Gemisches unter Erhitzen, Extrudieren und Pelletisieren des erhaltenen Gemisches, Vermischen der erhaltenen Pellets mit einem Carbonsäure-Metallsalz nach einem der Ansprüche 1 und 8 bis 10, und Formen des erhaltenden Gemisches.

**Revendications**

1. Une composition de polyester comprenant

A. 100 parties en poids d'un polyester aromatique contenant des motifs répétés répondant aux formules générales (I) et (II)

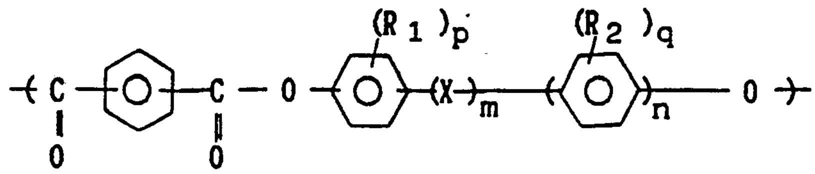 (I)

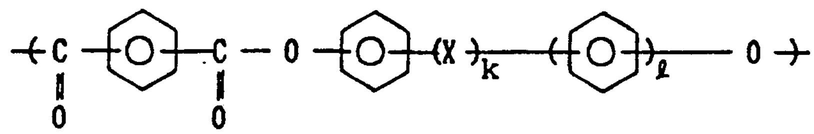 (II)

dans lesquelles

X = alcoylène en $C_1—C_{10}$, cycloalkylène où cycloalcolidène en $C_5—C_{15}$, —O—, —S—, —CO— ou $—SO_2—$

$R_1$, $R_2$ = alcoyle, aryle, aralcoyle, alcoxy, aryloxy ou aralcoyloxy en $C_1—C_{20}$.

p, q; p + q = entier de 1 à 8 ($1 \leqslant p, q \leqslant 4$)

m, n = 0 ou 1 (si m = 1, n ≠ 0)

k, l = 0 ou 1 (si k = 1, l ≠ 0), et

rapport molaire (I)/(I) + (II) = 1—0,01,

B. 0,01 à 5 parties en poids d'un phosphite de formule générale (VI):

$$(R_7O)_3P \text{ ou } (R_7O)_2P—OR_8—O—P(OR_7)_2 \qquad (VI)$$

dans laquelle

$R_7$ = alcoyle, cycloalcoyle, aryle, arylalcoyle ou alcoylaryle en $R_8—C_{30}$

$R_8$ = aromatique ou aliphatique en $C_1—C_{50}$ (chaque substituant peut ou non être le même)

ou de formule générale:

$$—(R_9—O—P(OR_{10})—O)_n— \qquad (VII)$$

dans laquelle

$R_9$ = comme $R_8$

$R_{10}$ = comme $R_7$

n = entier de 3 à 50, et

C. 0,01 à 0,1 partie en poids d'un sel métallique d'acide carboxylique.

2. La composition de la revendication 1, dans laquelle le rapport molaire de (III)/(III) + (IV), contenu dans le polyester aromatique, se situe dans la gamme de 1 à 0,1:

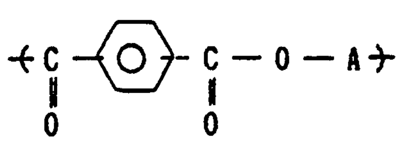 (III)

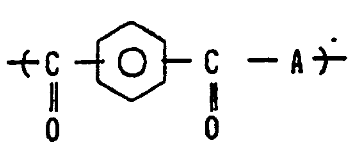 (IV)

où

A = reste de bisphénol.

3. La composition de la revendication 2, dans laquelle le rapport molaire de (III)/(III) + (IV) se situe dans la gamme de 1 à 0,4.

4. La composition de la revendication 2, dans laquelle le rapport molaire de (III)/(III) + (IV) se situe dans la gamme de 1 à 0,9.

5. La composition de la revendication 1, dans laquelle la formule générale (I) est définie par la formule générale (V):

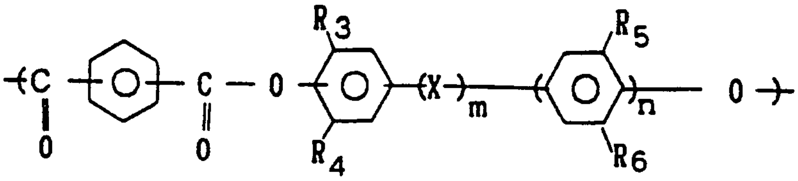

(V)

dans laquelle

X, m, n = comme indiqué dans la revendication 1

$R_3$ à $R_6$ = alcoyle ou alcoxy en $C_1$—$C_4$ ou phényle.

6. La composition de la revendication 1, dans laquelle le polyester aromatique a une viscosité spécifique de 0,4 à 0,8 dl/g (32°C; chloroforme).

7. La composition de la revendication 1, dans laquelle $R_7$ du phosphite (VI) est un aryle ou alcoylaryle en $C_8$—$C_{30}$.

8. La composition de la revendication 1, dans laquelle l'acide carboxylique utilisé sous forme du sel métallique d'acide carboxylique répond à la formule générale (VIII):

$$R_{11}\text{—COOH} \qquad \text{(VIII)}$$

dans laquelle

$R_{11}$ = reste aliphatique ou aromatique en $C_7$—$C_{30}$.

9. La composition de la revendication 8, dans laquelle l'acide carboxylique est un acid carboxylique saturé ou insaturé en $C_{11}$—$C_{23}$.

10. La composition de la revendication 1, dans laquelle métal utilisé sous forme du sel métallique d'acide carboxylique appartient aux groupes II à IV de la classification périodique courte des éléments.

11. Un procédé pour produir des articles façonnés comprenant les étapes de

mélange de 100 parties en poids d'un polyester aromatique selon l'une quelconque des revendications 1 à 6 avec 0,01 à 5 parties en poids d'un phosphite selon l'une quelconque des revendications 1 et 7,

mélange à chaud uniform,

extrusion et granulation du mélange obtenu,

mélange des granules obtenus avec un sel métallique d'acide carboxylique selon l'une quelconque des revendicatons 1 et 8 à 10, et

moulage du mélange obtenu.